# EUROPEAN PATENT SPECIFICATION

(11) **EP 2 892 274 B1**
(45) Date of publication and mention of the grant of the patent: **05.06.2019**
(21) Application number: 12884063.4
(22) Date of filing: 07.09.2012
(51) Int. Cl.: H04W 24/04

(54) **FAULT RECOVERY METHOD OF OPERATION AND MAINTENANCE CHANNEL AND NETWORK MANAGEMENT TERMINAL**
AUSFALLWIEDERHERSTELLUNGSVERFAHREN FÜR EINEN BETRIEBS- UND WARTUNGSKANAL UND EIN NETZWERKVERWALTUNGSENDGERÄT
PROCÉDÉ DE REPRISE SUR DÉFAILLANCE DE CANAL D'EXPLOITATION ET DE MAINTENANCE ET TERMINAL DE GESTION DE RÉSEAU

(43) Date of publication of application: 08.07.2015
(73) Proprietor: Huawei Technologies Co., Ltd., Longgang District Shenzhen, Guangdong 518129 (CN)
(72) Inventor: HE, Enhua, Shenzhen Guangdong 518129 (CN); XU, Shenghong, Shenzhen Guangdong 518129 (CN)
(74) Representative: Gill Jennings & Every LLP
(86) International application number: PCT/CN2012/081137
(87) International publication number: WO 2014/036724

(56) References cited:
- WO-A1-2012/051895
- CN-A- 101 309 494
- CN-A- 101 909 316
- CN-A- 101 909 316
- CN-A- 101 958 839
- CN-A- 102 300 239
- CN-A- 102 457 874
- JP-A- H11 346 382

## Description

### TECHNICAL FIELD

The present invention relates to the field of radio communications, and in particular, to a fault recovery method and a network management terminal for an operation maintenance channel.

### BACKGROUND

In a WCDMA (Wideband Code Division Multiple Access, wideband code division multiple access) system, an RAN (Radio Access Network, radio access network) side includes a Node B base station and an RNC (Radio Access Controller, radio access controller); to save RNC costs during network establishment, an RNC generally needs to provide large area coverage, and is connected to and controls multiple Node Bs; a Node B connected to the RNC is generally far away from the RNC, and a distance may reach over 100 kilometers; moreover, the Node Bs are also far away from each other. To maintain and manage a system conveniently, in general, management and maintenance personnel establish an OMCH (Operation Maintenance Channel, operation maintenance channel) between a network management terminal and a Node B to facilitate remote management, maintenance, and control on hardware and software of the Node B; once a fault occurs on the OMCH, the network management terminal cannot deliver a command through the OMCH, and normal software and hardware maintenance cannot be performed; to restore the OMCH, the management and maintenance personnel need to go to a base station at a local end to reset the base station so as to restore the OMCH, which requires high manpower costs and a lot of maintenance costs. WO2012/051895 and CN101909316 each disclose network management terminals.

### SUMMARY

Embodiments of the present invention provide a fault recovery method and a network management terminal for an operation maintenance channel, so as to solve a problem that when an OMCH between a network management terminal and a base station is faulty, it is necessary to go to the base station at a local end to reset the base station, so as to restore the OMCH, which requires high manpower costs and a lot of maintenance costs.

To achieve the foregoing objective, in a first aspect of the present invention, a fault recovery method for an operation maintenance channel is provided and includes:
detecting whether an operation maintenance channel OMCH between a network management terminal and a base station is normal; and
if the operation maintenance channel OMCH is abnormal, controlling a base station controller to deliver a reset instruction to the base station through a service channel bearing service functions, so that the base station performs a reset operation after receiving the reset instruction. The method includes:
when the operation maintenance channel OMCH is abnormal, detecting whether the service channel between the base station and the base station controller is normal; and if the service channel is normal, performing the step of controlling a base station controller to deliver a reset instruction to the base station through a service channel bearing service functions. The detecting whether the service channel between the base station and the base station controller is normal includes:
controlling the base station controller to periodically send a packet to the base station through the service channel; and
determining whether a response message after the base station receives the packet is received within a preset duration; and if the response message is received, determining that the service channel is normal.

With reference to the first aspect, optionally, the detecting whether the operation maintenance channel OMCH between the network management terminal and the base station is normal includes:
periodically sending, by the network management terminal, a detection package to the base station through the operation maintenance channel OMCH; and
determining whether a response message after the base station receives the detection package is not received within a preset duration; and if the response message is not received, determining that the operation maintenance channel OMCH is abnormal.

Optionally, the reset instruction includes a normal reset Normal Reset instruction or a poweroff reset Poweroff Reset instruction.

In a second aspect of the present invention, a network management terminal is further provided and includes:
a first detection module, configured to detect whether an operation maintenance channel OMCH between a network management terminal and a base station is normal; and
a reset module, configured to, when the first detection module detects that the operation maintenance channel OMCH is abnormal, control a base station controller to deliver a reset instruction to the base station through a service channel bearing service functions, so that the base station performs a reset operation after receiving the reset instruction The network management terminal further includes:
a second detection module, configured to, when the operation maintenance channel OMCH is abnormal, detect whether the service channel between the base station and the base station controller is normal; and if the service channel is normal, send a detection result to the reset module.

The second detection module includes:
a second sending unit, configured to control the base station controller to periodically send a packet to the base station through the service channel; and
a second determination unit, configured to determine whether a response message after the base station receives the packet is received within a preset duration; and if the response message is received, determine that the service channel is normal.

Optionally, the first detection module includes:
a first sending unit, configured to periodically send a detection package to the base station through the operation maintenance channel OMCH; and
a first determination unit, configured to determine whether a response message after the base station receives the detection package is not received within a preset duration; and if the response message is not received, determine that the operation maintenance channel OMCH is abnormal.

In a comparative example of the present invention, another network management terminal is provided and includes an input apparatus, an output apparatus, a memory, and a processor, where the processor performs the following steps:
detecting whether an operation maintenance channel OMCH between a network management terminal and a base station is normal; and if the operation maintenance channel OMCH is abnormal, controlling a base station controller to deliver a reset instruction to the base station through a service channel bearing service functions, so that the base station performs a reset operation after receiving the reset instruction.

The processor may further perform the following steps:
when the operation maintenance channel OMCH is abnormal, detecting whether the service channel between the base station and the base station controller is normal; and if the service channel is normal, performing the step of controlling a base station controller to deliver a reset instruction to the base station through a service channel bearing service functions.

Optionally, the detecting, by the processor, whether the operation maintenance channel OMCH between the network management terminal and the base station is normal includes:
periodically sending a detection package to the base station through the operation maintenance channel OMCH; and
determining whether a response message after the base station receives the detection package is not received within a preset duration; and if the response message is not received, determining that the operation maintenance channel OMCH is abnormal.

Optionally, the detecting, by the processor, whether the service channel between the base station and the base station controller is normal includes:
controlling the base station controller to periodically send a packet to the base station through the service channel; and
determining whether a response message after the base station receives the packet is received within a preset duration; and if the response message is received, determining that the service channel is normal.

In the embodiments and comparative examples of the present invention, when an OMCH channel between a network management terminal and a base station is faulty, the network management terminal controls a base station controller to send a reset instruction to the base station through a service channel bearing service functions, so that the base station performs a reset operation to restore the OMCH channel, which avoids going to the base station at a local end to perform reset and saves maintenance costs.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1 is a schematic flow chart of a fault recovery method for an operation maintenance channel according to an embodiment of the present invention;
FIG. 2 is a schematic flow chart of another fault recovery method for an operation maintenance channel according to an embodiment of the present invention;
FIG. 3 is a schematic structural diagram of a network management terminal according to an embodiment of the present invention;
FIG. 4 is a schematic structural diagram of another network management terminal according to an embodiment of the present invention;
FIG. 5 is a schematic structural diagram of a first detection module in FIG. 4;
FIG. 6 is a schematic structural diagram of a second detection module in FIG. 4; and
FIG. 7 is a schematic structural diagram of yet another network management terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

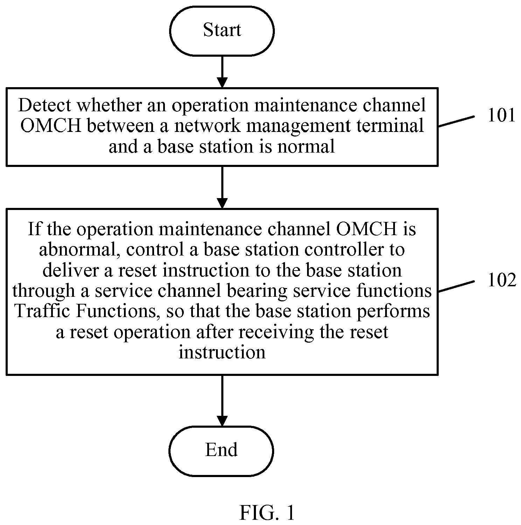

Referring to FIG. 1, FIG. 1 is a schematic flow chart of a fault recovery method for an operation maintenance channel according to an embodiment of the present invention, which includes the following steps:
Step 101: Detect whether an operation maintenance channel OMCH between a network management terminal and a base station is normal.

Specifically, the detecting whether an operation maintenance channel between a network management terminal and a base station is normal may be performed according to an alarm mechanism; generally, a base station side supports the alarm mechanism; when the operation maintenance channel is unavailable, alarm information is generated, and the alarm information is fed back to the network management terminal, indicating that the operation maintenance channel is faulty currently. A specific detection method may be implemented by using multiple existing regular manners according to an actual situation, which is not limited by the present invention.

Step 102: If the operation maintenance channel OMCH is abnormal, control a base station controller to deliver a reset instruction to the base station through a service channel bearing service functions Traffic Functions, so that the base station performs a reset operation command.

By implementing the embodiment of the present invention, when an operation maintenance channel OMCH between a network management terminal and a base station is faulty and the base station cannot be maintained through the OMCH, a reset instruction is delivered to the base station through an existing service channel bearing service functions between a base station controller and the base station, so that the base station executes the reset command to restore a normal function of the operation maintenance channel; thereby, it is unnecessary for maintenance personnel to go to the base station at a local end to perform an operation, saving maintenance costs.

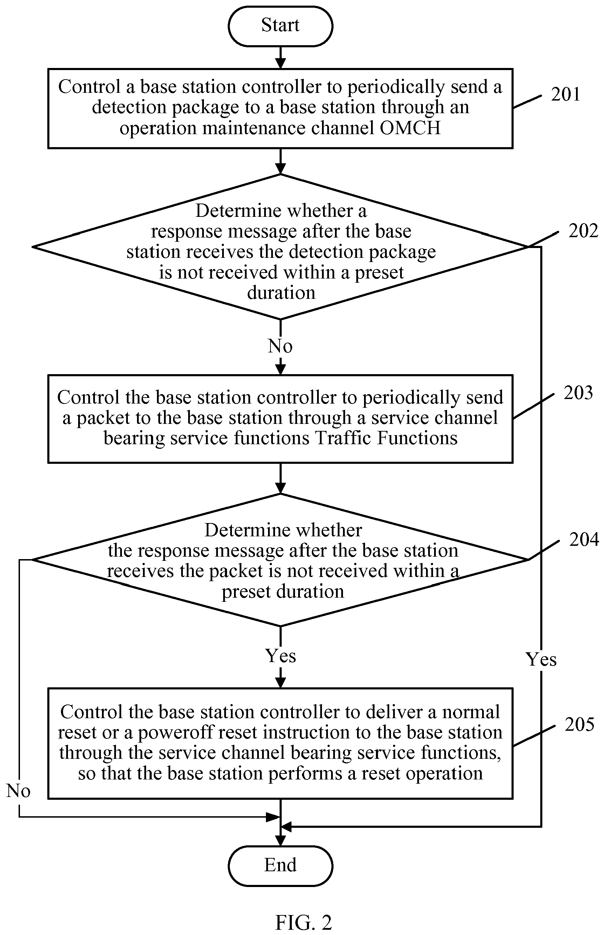

Referring to FIG. 2, FIG. 2 is a schematic flow chart of another fault recovery method for an operation maintenance channel according to an embodiment of the present invention, which includes the following steps:
Step 201: Control a base station controller to periodically send a detection package to a base station through an operation maintenance channel OMCH.

Specifically, when transmission is performed in an IP form between the base station and the base station controller, a Ping (Packet Internet Groper, packet Internet groper) may be used. The detection package is a Ping detection package, and the Ping is a very useful tool for testing a network connection status and is a most common command for a network test. The Ping of the base station controller sends a loopback request detection package to the base station, requiring the base station to respond after receiving a request, so as to determine response time of a network and whether the base station controller is connected to the base station.

Step 202: Determine whether a response message after the base station receives the detection package is not received within a preset duration.

Specifically, if a network management terminal does not receive the response message from the base station within the preset duration, it is determined that the operation maintenance channel OMCH between the network management terminal and the base station is abnormal, and step 203 is performed; if the network management terminal receives the response message from the base station within the preset duration, it is determined that the operation maintenance channel between the network management terminal and the base station is normal, and a normal maintenance operation of software and hardware may be performed. Consecutively sending the detection package for the preset number of times may also be used as a condition for determining abnormality; if the response message is not received from the base station, it is determined that the operation maintenance channel between the network management terminal and the base station is abnormal; another method may also be used.

Step 203: Control the base station controller to periodically send a packet to the base station through a service channel bearing service functions Traffic Functions.

Specifically, that is to detect whether the service channel between the base station controller and the base station is normal. For a detection method, reference may be made to the description in step 201, where the packet is sent in a Ping manner, and details are not repeatedly described herein.

Step 204: Determine whether a response message after the base station receives the packet is not received within a preset duration.

Specifically, if the response message is not received from the base station within the preset duration, it is determined that the service channel between the base station controller and the base station is abnormal; if the response message is received from the base station within the preset duration, it is determined that the service between the base station controller and the base station is normal. Consecutively sending the detection package for the preset number of times may also be used as a condition for determining abnormality; if the response message is not received from the base station, it is determined that the service channel between the base station controller and the base station is abnormal; a method for monitoring a service KPI (Key Performance Index, key performance index) may also be used for determination, which is not limited by the present invention.

Step 205: Control the base station controller to deliver a normal reset or poweroff reset instruction to the base station through the service channel bearing service functions Traffic Functions, so that the base station performs a reset operation.

Specifically, the network management terminal sends the normal reset instruction or the poweroff reset instruction to the base station through a control plane Control Plane of the base station controller or an IuB of a user plane User Plane. Compared with poweroff reset, normal reset has less impact on a system and shorter startup time. Therefore, a normal reset instruction is selected preferentially and sent to the base station. If the operation maintenance channel between the network management terminal and the base station is not restored after the normal reset instruction is sent, the base station controller is then controlled to send a poweroff reset instruction to the base station.

By implementing the embodiment of the present invention, when an operation maintenance channel OMCH between a network management terminal and a base station is faulty and the base station cannot be maintained through the OMCH, a base station controller is controlled to deliver a reset instruction to the base station through an existing service channel bearing service functions, so that the base station executes the reset command to restore a normal function of the operation maintenance channel; thereby, it is unnecessary for maintenance personnel to go to the base station at a local end to perform an operation, saving maintenance costs.

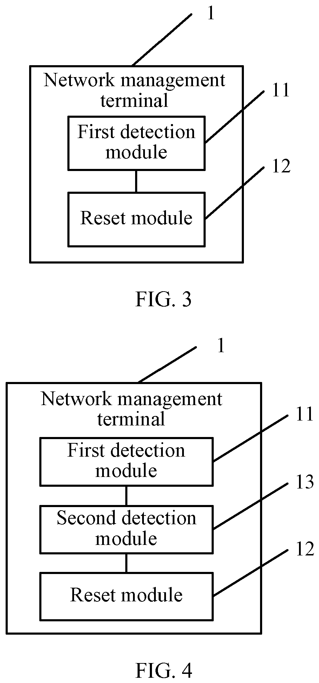

Referring to FIG. 3, FIG. 3 is a schematic structural diagram of a network maintenance terminal according to an embodiment of the present invention, including a first detection module 11 and a reset module 12.

The first detection module 11 is configured to detect whether an operation maintenance channel OMCH between a network management terminal and a base station is normal;
Specifically, the first detection module 11 may detect whether an operation maintenance channel between a network management terminal and a base station is normal according to an alarm mechanism; generally a base station side supports the alarm mechanism; and when the operation maintenance channel is unavailable, alarm information is generated and fed back to the first detection module 11, indicating that the operation maintenance channel is faulty currently. A specific detection method may be implemented by using multiple existing regular manners according to an actual situation, which is not limited by the present invention.

The reset module 12 is configured to, when the first detection module 11 detects that the operation maintenance channel OMCH is abnormal, control a base station controller to deliver a reset instruction to the base station through a service channel bearing service functions Traffic Functions, so that the base station performs a reset operation after receiving the reset instruction.

By implementing the embodiment of the present invention, when an operation maintenance channel OMCH between a network management terminal and a base station is faulty and the base station cannot be maintained through the OMCH, a base station controller is controlled to deliver a reset instruction to the base station through an existing service channel bearing service functions, so that the base station executes the reset command to restore a normal function of the operation maintenance channel; thereby, it is unnecessary for maintenance personnel to the base station at a local end to perform an operation, saving maintenance costs.

Referring to FIG. 4 to FIG. 6, FIG. 4 to FIG. 6 are schematic structural diagrams of another network management terminal according to an embodiment of the present invention, including:
a first detection module 11, a second detection module 13, and a reset module 12.

The first detection module 11 includes a first sending unit 111 and a first determination unit 112.

The first sending unit 111 is configured to periodically send a detection package to a base station through an operation maintenance channel OMCH.

Specifically, when transmission is performed in an IP form between the network management terminal and the base station, a Ping (Packet Internet Groper, packet Internet groper) may be used; the detection package is a Ping detection package, and the Ping is a very useful tool for testing a network connection status and is a most common command for a network test. The Ping of the first sending unit 111 sends a loopback request detection package to the base station, requiring the base station to respond after receiving a request, so as to determine response time of a network and whether the network management terminal is connected to the base station.

The first determination unit 112 is configured to determine whether a response message after the base station receives the detection package is not received within a preset duration; and if the response message is not received, determine that the operation maintenance channel OMCH is abnormal.

Specifically, if the first determination unit 112 does not receive the response message from the base station within the preset duration, it is determined that the operation maintenance channel OMCH between the network management terminal and the base station is abnormal, and step 203 is performed; if the first determination unit 112 receives the response message from the base station within the preset duration, it is determined that the operation maintenance channel between the network management terminal and the base station is normal, and a normal maintenance operation of software and hardware may be performed. Consecutively sending the detection package for the preset number of times may also be used as a condition for determining abnormality; if the response message is not received from the base station, it is determined that the operation maintenance channel between the network management terminal and the base station is abnormal; another method may also be used.

The second detection module 13 includes: a second sending unit 131 and a second determination unit 132.

The second sending unit 131 is configured to control the base station controller to periodically send a packet to the base station through a service channel.

Specifically, that is to detect whether the service channel between the base station controller and the base station is normal; for a detection method, reference may be made to description in step 201; the second sending unit 131 sends the packet in a Ping manner, and details are not repeatedly described herein.

The second determination unit 132 is configured to determine whether a response message after the base station receives the packet is received within a preset duration; and if the response message is received, determine that the service channel is normal.

Specifically, if the second determination unit 132 does not receive the response message from the base station within the preset duration, it is determined that the service channel between the base station controller and the base station is abnormal; if the response message is received from the base station within the preset duration, it is determined that the service channel between the base station controller and the base station is normal. Consecutively sending the detection package for the preset number of times may also be used as a condition for determining abnormality; if the response message is not received from the base station, it is determined that the service channel between the base station controller and the base station is abnormal; the second determination unit 132 may also use a method for monitoring a service KPI (Key Performance Index, key performance index) for determination, which is not limited by the present invention.

By implementing the embodiment of the present invention, when an operation maintenance channel OMCH between a network management terminal and a base station is faulty and the base station cannot be maintained through the OMCH, a reset instruction is delivered to the base station through an existing service channel bearing service functions, so that the base station executes the reset command to restore a normal function of the operation maintenance channel; thereby, it is unnecessary for maintenance personnel to go to the base station at a local end to perform an operation, saving maintenance costs.

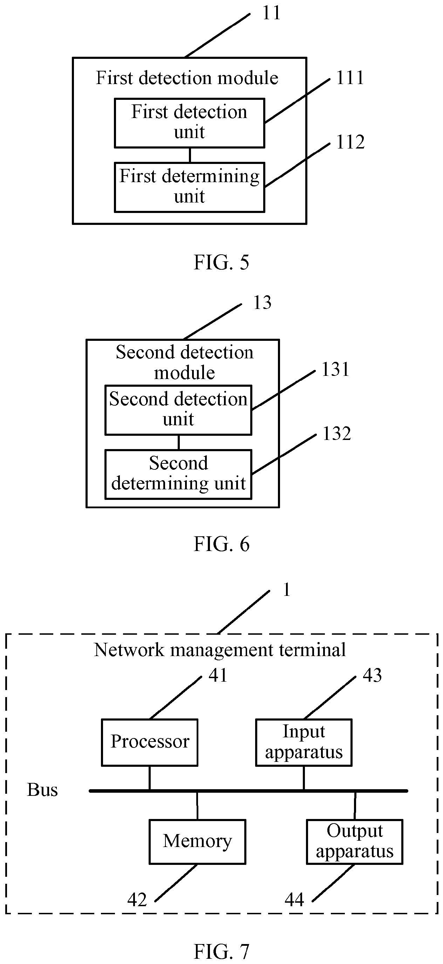

Referring to FIG. 7, FIG. 7 is a schematic structural diagram of another network management terminal according to an embodiment of the present invention, including:
a processor 41, a memory 42, an input apparatus 43, and an output apparatus 44, where the processor 41 in the network management terminal may be one or more, and one processor is taken as an example in FIG. 7. In some embodiments of the present invention, the processor 41, storage 42, input apparatus 43, and output apparatus 44 may be connected through a bus or in another manner, and connection through the bus is taken as an example in FIG. 7.

The processor 41 invokes a program stored in the memory 42 to perform the following steps:
detecting whether an operation maintenance channel OMCH between a network management terminal and a base station is normal; and if the operation maintenance channel OMCH is abnormal, controlling a base station controller to deliver a reset instruction to the base station through a service channel bearing service functions Traffic Functions, so that the base station performs a reset operation after receiving the reset instruction.

In some embodiments of the present invention, the processor 41 is further used to perform the steps:
when the operation maintenance channel OMCH is abnormal, detecting whether the service channel between the base station and the base station controller is normal; and if the service channel is normal, performing the step of controlling a base station controller to deliver a reset instruction to the base station through a service channel bearing service functions Traffic Functions.

The detecting, by the processor, whether the service channel between the base station and the base station controller is normal includes:
periodically sending, by the network management terminal, a detection package to the base station through the operation maintenance channel OMCH; and
determining whether a response message after the base station receives the detection package is not received within a preset duration; and if the response message is not received, determining that the operation maintenance channel OMCH is abnormal.

The detecting, by the processor, whether the service channel between the base station and the base station controller is normal includes:
controlling the base station controller to periodically send a packet to the base station through the service channel; and
determining whether a response message after the base station receives the packet is received within a preset duration; and if the response message is received, determining that the service channel is normal.

By implementing the embodiment of the present invention, when an operation maintenance channel OMCH between a network management terminal and a base station is faulty and the base station cannot be maintained through the OMCH, a reset instruction is delivered to the base station through an existing service channel bearing service functions, so that the base station executes the reset command to restore a normal function of the operation maintenance channel; thereby, it is unnecessary for maintenance personnel to go to the base station at a local end to perform an operation, saving maintenance costs.

The foregoing discloses merely exemplary embodiments of the present invention, and certainly, is not intended to limit the idea of the present invention.

## Claims

1. A fault recovery method for an operation maintenance channel, comprising:
detecting (101) whether an operation maintenance channel OMCH between a network management terminal and a base station is normal;
**characterized in that**:
if the operation maintenance channel OMCH is abnormal:
detecting whether the service channel between the base station and the base station controller is normal, wherein the detecting whether the service channel between the base station and the base station controller is normal comprises:
controlling (203) the base station controller to periodically send a packet to the base station through the service channel; and
determining (204) whether a response message after the base station receives the packet is received within a preset duration; and if the response message is received, determining that the service channel is normal;
and, if the service channel is normal, performing the step of controlling a base station controller to deliver a reset instruction to the base station through a service channel bearing service functions; and
controlling (102) a base station controller to deliver a reset instruction to the base station through a service channel bearing service functions, so that the base station performs a reset operation after receiving the reset instruction.

2. The method according to claim 1, wherein the detecting (101) whether the operation maintenance channel OMCH between the network management terminal and the base station is normal comprises:
periodically sending (201), by the network management terminal, a detection package to the base station through the operation maintenance channel OMCH; and
determining (202) whether a response message after the base station receives the detection package is not received within a preset duration; and if the response message is not received, determining that the operation maintenance channel OMCH is abnormal.

3. The method according to claim 1 or claim 2, wherein the reset instruction comprises a normal reset Normal Reset instruction or a poweroff reset Poweroff Reset instruction.

4. A network management terminal (1), comprising:
a first detection module (11), configured to detect whether an operation maintenance channel OMCH between the network management terminal and a base station is normal;
**characterized by**:
a reset module (12), configured to, when the first detection module detects that the operation maintenance channel OMCH is abnormal, control a base station controller to deliver a reset instruction to the base station through a service channel bearing service functions, so that the base station performs a reset operation after receiving the reset instruction;
a second detection module (13), configured to, when the operation maintenance channel OMCH is abnormal, detect whether the service channel between the base station and the base station controller is normal; and if the service channel is normal, send a detection result to the reset module;
wherein the second detection module (13) comprises:
a second sending unit (131), configured to control the base station controller to periodically send a packet to the base station through the service channel; and
a second determination unit (132), configured to determine whether a response message after the base station receives the packet is received within a preset duration; and if the response message is received, determine that the service channel is normal.

5. The network management terminal (1) according to claim 4, wherein the first detection (11) module comprises:
a first sending unit (111), configured to periodically send a detection package to the base station through the operation maintenance channel OMCH; and
a first determination unit (112), configured to determine whether a response message after the base station receives the detection package is not received within a preset duration; and if the response message is not received, determine that the operation maintenance channel OMCH is abnormal.

## Patentansprüche

1. Fehlerbehebungsverfahren für einen Betriebswartungskanal, umfassend:
Erfassen (101), ob ein Betriebswartungskanal OMCH (Operation Maintenance Channel) zwischen einem Netzwerkverwaltungsendgerät und einer Basisstation normal ist;
**dadurch gekennzeichnet, dass**
wenn der Betriebswartungskanal OMCH nicht normal ist:
Erfassen, ob der Dienstkanal zwischen der Basisstation und der Basisstationssteuerung normal ist, wobei das Erfassen, ob der Dienstkanal zwischen der Basisstation und der Basisstationssteuerung normal ist, umfasst:
Steuern (203) der Basisstationssteuerung, um periodisch ein Paket über den Dienstkanal an die Basisstation zu senden; und
Bestimmen (204), ob eine Antwortnachricht, nachdem die Basisstation das Paket empfangen hat, innerhalb einer vorgegebenen Dauer empfangen wird; und wenn die Antwortnachricht empfangen wird, Bestimmen, dass der Dienstkanal normal ist;
und, wenn der Dienstkanal normal ist, Durchführen des Schrittes des Steuerns einer Basisstationssteuerung, um eine Rücksetzanweisung an die Basisstation über einen Dienstkanal mit Dienstfunktionen zu liefern; und
Steuern (102) einer Basisstationssteuerung, um der Basisstation über einen Dienstkanal, der Servicefunktionen trägt, eine Rücksetzanweisung zu liefern, so dass die Basisstation nach dem Empfangen der Rücksetzanweisung einen Rücksetzvorgang durchführt.

2. Verfahren nach Anspruch 1, wobei das Erfassen (101), ob der Betriebswartungskanal OMCH zwischen dem Netzwerkverwaltungsendgerät und der Basisstation normal ist, umfasst:
periodisches Senden (201) eines Erfassungspakets durch das Netzwerkverwaltungsendgerät an die Basisstation über den Betriebswartungskanal OMCH; und
Bestimmen (202), ob eine Antwortnachricht, nachdem die Basisstation das Erfassungspaket empfangen hat, nicht innerhalb einer voreingestellten Dauer empfangen wird; und wenn die Antwortnachricht nicht empfangen wird, Bestimmen, dass der Betriebswartungskanal OMCH nicht normal ist.

3. Verfahren nach Anspruch 1 oder Anspruch 2, wobei die Rücksetzanweisung eine normale Rücksetzanweisung Normal Reset oder eine Ausschaltrücksetzanweisung Poweroff Reset umfasst.

4. Netzwerkverwaltungsendgerät (1), umfassend:
ein erstes Erfassungsmodul (11), das zum Erfassen ausgelegt ist, ob ein Betriebswartungskanal OMCH zwischen dem Netzwerkverwaltungsendgerät und einer Basisstation normal ist;
**gekennzeichnet durch**
ein Rücksetzmodul (12), das zum Steuern einer Basisstationssteuerung ausgelegt ist, um, wenn das erste Erfassungsmodul erfasst, dass der Betriebswartungskanal OMCH nicht normal ist, eine Rücksetzanweisung an die Basisstation über einen Dienstkanal mit Servicefunktionen zu liefern, so dass die Basisstation nach dem Empfangen der Rücksetzanweisung einen Rücksetzvorgang ausführt;
ein zweites Erfassungsmodul (13), das zum Erfassen, wenn der Betriebswartungskanal OMCH nicht normal ist, ausgelegt ist, ob der Dienstkanal zwischen der Basisstation und der Basisstationssteuerung normal ist; und wenn der Dienstkanal normal ist, Senden eines Erfassungsergebnisses an das Rücksetzmodul;
wobei das zweite Erfassungsmodul (13) umfasst:
eine zweite Sendeeinheit (131), die zum Steuern der Basisstationssteuerung ausgelegt ist, um periodisch ein Paket über den Dienstkanal an die Basisstation zu senden; und
eine zweite Bestimmungseinheit (132), die zum Bestimmen ausgelegt ist, ob eine Antwortnachricht, nachdem die Basisstation das Paket empfangen hat, innerhalb einer vorgegebenen Dauer empfangen wird; und wenn die Antwortnachricht empfangen wird, Bestimmen, dass der Dienstkanal normal ist.

5. Netzwerkverwaltungsendgerät (1) nach Anspruch 4, wobei das erste Erfassungsmodul (11) umfasst:
eine erste Sendeeinheit (111), die zum periodischen Senden eines Erfassungspakets an die Basisstation über den Betriebswartungskanal OMCH ausgelegt ist; und
eine erste Bestimmungseinheit (112), die zum Bestimmen ausgelegt ist, ob eine Antwortnachricht, nachdem die Basisstation das Erfassungspaket empfangen hat, nicht innerhalb einer vorgegebenen Dauer empfangen wird; und wenn die Antwortnachricht nicht empfangen wird, Bestimmen, dass der Betriebswartungskanal OMCH nicht normal ist.

## Revendications

1. Procédé de reprise après panne pour un canal de maintenance de fonctionnement, comprenant :
la détection (101) qu'un canal de maintenance de fonctionnement OMCH entre un terminal de gestion de réseau et une station de base est ou n'est pas normal ;
**caractérisé en ce que** :
si le canal de maintenance de fonctionnement OMCH est anormal :
la détection que le canal de service entre la station de base et le dispositif de commande de station de base est ou n'est pas normal, dans lequel la détection que le canal de service entre la station de base et le dispositif de commande de station de base est ou n'est pas normal comprend :
la commande (203) du dispositif de commande de station de base pour envoyer périodiquement un paquet à la station de base par l'intermédiaire du canal de service ; et
la détermination (204) qu'un message de réponse, après que la station de base reçoit le paquet, est ou n'est pas reçu au sein d'une durée préréglée ; et, si le message de réponse est reçu, la détermination que le canal de service est normal ;
et, si le canal de service est normal, la réalisation de l'étape de la commande d'un dispositif de commande de station de base pour livrer une instruction de remise à l'état initial à la station de base par l'intermédiaire d'un canal de service supportant des fonctions de service ; et
la commande (102) d'un dispositif de commande de station de base pour livrer une instruction de remise à l'état initial à la station de base par l'intermédiaire d'un canal de service supportant des fonctions de service, pour que la station de base réalise une opération de remise à l'état initial après la réception de l'instruction de remise à l'état initial.

2. Procédé selon la revendication 1, dans lequel la détection (101) que le canal de maintenance de fonctionnement OMCH entre le terminal de gestion de réseau et la station de base est ou n'est pas normal comprend :
l'envoi périodique (201), par le terminal de gestion de réseau, d'un bloc de détection à la station de base par l'intermédiaire du canal de maintenance de fonctionnement OMCH ; et
la détermination (202) qu'un message de réponse, après que la station de base reçoit le bloc de détection, est ou n'est pas reçu au sein d'une durée préréglée ; et, si le message de réponse n'est pas reçu, la détermination que le canal de maintenance de fonctionnement OMCH est anormal.

3. Procédé selon la revendication 1 ou la revendication 2, dans lequel l'instruction de remise à l'état initial comprend une instruction de remise à l'état initial normale Normal Reset ou une instruction de remise à l'état initial à mise hors tension Poweroff Reset.

4. Terminal de gestion de réseau (1), comprenant :
un premier module de détection (11), configuré pour détecter qu'un canal de maintenance de fonctionnement OMCH entre le terminal de gestion de réseau et une station de base est ou n'est pas normal ;
**caractérisé par** :
un module de remise à l'état initial (12), configuré pour, lorsque le premier module de détection détecte que le canal de maintenance de fonctionnement OMCH est anormal, commander un dispositif de commande de station de base pour livrer une instruction de remise à l'état initial à la station de base par l'intermédiaire d'un canal de service supportant des fonctions de service, pour que la station de base réalise une opération de remise à l'état initial après la réception de l'instruction de remise à l'état initial ;
un second module de détection (13), configuré pour, lorsque le canal de maintenance de fonctionnement OMCH est anormal, détecter que le canal de service entre la station de base et le dispositif de commande de station de base est ou n'est pas normal ; et, si le canal de service est normal, envoyer un résultat de détection au module de remise à l'état initial ;
dans lequel le second module de détection (13) comprend :
une seconde unité d'envoi (131), configurée pour commander le dispositif de commande de station de base pour envoyer périodiquement un paquet à la station de base par l'intermédiaire du canal de service ; et
une seconde unité de détermination (132), configurée pour déterminer qu'un message de réponse, après que la station de base reçoit le paquet, est ou n'est pas reçu au sein d'une durée préréglée ; et, si le message de réponse est reçu, déterminer que le canal de service est normal.

5. Terminal de gestion de réseau (1) selon la revendication 4, dans lequel le premier module de détection (11) comprend :
une première unité d'envoi (111), configurée pour envoyer périodiquement un bloc de détection à la station de base par l'intermédiaire du canal de maintenance de fonctionnement OMCH ; et
une première unité de détermination (112), configurée pour déterminer qu'un message de réponse, après que la station de base reçoit le bloc de détection, est ou n'est pas reçu au sein d'une durée préréglée ; et, si le message de réponse n'est pas reçu, déterminer que le canal de maintenance de fonctionnement OMCH est anormal.
